(19) Europäisches Patentamt / European Patent Office / Office européen des brevets

(11) **EP 2 634 995 A1**

(12) **EUROPEAN PATENT APPLICATION**

(43) Date of publication:
**04.09.2013 Bulletin 2013/36**

(51) Int Cl.:
*H04L 29/06* *(2006.01)*

(21) Application number: **13156197.9**

(22) Date of filing: **21.02.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **29.02.2012  KR 20120021084**<br><br>(71) Applicant: **Samsung Electronics Co., Ltd Gyeonggi-do 443-742 (KR)**<br><br>(72) Inventors:<br>• **Lee, Heung-Ki**<br>  **Daejeon (KR)** | • **Kook, Seung-Ryong**<br>  **Gyeonggi-do (KR)**<br>• **Ahn, Kyung-Jin**<br>  **Gyeonggi-do (KR)**<br>• **Yang, Jae-Yong**<br>  **Gyeonggi-do (KR)**<br>• **Kim, Gil-Yoon**<br>  **Gyeonggi-do (KR)**<br><br>(74) Representative: **Birchenough, Lewis et al Harrison Goddard Foote LLP Saviour House 9 St Saviourgate York YO1 8NQ (GB)** |

(54) **Apparatus and method of displaying contents using key frames in a terminal**

(57)   A method for operating a terminal that can request stopping the transmission of an entire content including key frames and non-key frame, and receiving only the key frames from the entire content being previously transmitted by a server. The method includes requesting one or more key frames included in contents from a server, generating by the terminal the one or more skipped frames corresponding to non-key frames by receiving the key frames, and inserting the generated skipped frames between the key frames. The skipped frames are generated by the terminal, are identical to the key frames and are placed in positions by the terminal where non-key frames were once part of the entire content at the server.

FIG.1

EP 2 634 995 A1

**Description**

**BACKGROUND OF THE INVENTION**

1. Field of the Invention

The present invention relates generally to a portable terminal and ways to transmit and receive data over different networks. More particularly, the present invention relates to an apparatus and method for a portable terminal with a dual SIM card.

2. Description of the Related Art

Due to the development of various network environments, a mass content can be transmitted between a client and a server. However, the network environments are not error free and communication failures occur occasionally according to a network environment between a client and a server. For example, when a client requests data from a server that exceeds an allowed bandwidth, in the event of a poor quality network environment, there is often a partial data loss or traffic congestion in the network environment when such data requests are granted.

There are methods of increasing a data transmission rate which include reducing the amount of data transmitted from a server to a client, which ultimately wastes a storage space of the server due to storage of duplicate data streams because the server generates one stream into a plurality of streams of various picture qualities prior to storage in the server. Also, the method of providing a streaming service by extracting only key frames of data fails to provide an optimal service to a client because it does not consider audio/video synchronization of contents.

**SUMMARY OF THE INVENTION**

The present invention substantially solves at least some of the above problems and/or disadvantages and provides at least the advantages below. Accordingly, an object of the present invention is to provide an apparatus and method for actively receiving contents by reflecting a current network condition.

Another object of the present invention provides an apparatus and method for reproducing contents by receiving only key frames from a server when a network condition is poor.

Another object of the present invention provides an apparatus and method for reproducing an optimal content by generating skipped frames according to key frames, even without using all frames of contents.

In accordance with an aspect of the present invention, the method is provided. The method includes, requesting by a control unit of the portable terminal a transmission of one or more key frames of content from a server without transmission of one or more non-key frames associated with said one or more key frames, generating by the control unit of the portable terminal one or more skipped frames in a quantity that corresponds to the one or more non-key frames, respectively, by duplicating the key frames received from the server and inserting by the control unit of the portable terminal the generated skipped frames between the key frames of the content in the quantity and a position that corresponds to the one or more non-key frames that were not included in the transmission of the associated said one or more key frames.

In accordance with an aspect of the present invention, the method includes receiving from a terminal a request for one or more key frames of contents without sending one or more non-key frames associated with said one or more key frames and transmitting by the server the requested said one or more key frames to the terminal.

In accordance with another aspect of the present invention, the apparatus is provided. The apparatus includes, communication module for requesting content from a server comprising one or more key frames included in the content without transmission of one or more non-key frames associated with said one or more key frames and a control unit for generating one or more skipped frames in a quantity that corresponds to the one or more non-key frames, respectively, by duplicating the key frames received from the server, and inserting the generated skipped frames between respective key frames of the content in the quantity and a position that corresponds to the one or more non-key frames that were not included in the transmission of the associated said one or more key frames.

In accordance with another aspect of the present invention, the apparatus is provided. The apparatus includes, a communication module for receiving a request for one or more key frames of contents from a terminal and transmitting to the terminal the one or more key frames without transmission of one or more non-key frames associated with said one or more key frames and a control unit for controlling an operation of the server.

**BRIEF DESCRIPTION OF THE DRAWINGS**

The above and other exemplary objects, features and advantages of the present invention will become more apparent to a person from the following detailed description when taken in conjunction with the accompanying drawings in which:

FIG. 1 is a diagram illustrating an overall configuration of a server and a terminal reproducing contents by using key frames according to the present invention;
FIGs. 2A and 2B are diagrams illustrating an exemplary embodiment of key frames and non-key frames according to the present invention;
FIG. 3A and 3B are diagrams illustrating an exemplary embodiment of generating skipped frames according to the present invention;
FIG. 4 is a diagram illustrating an exemplary embodiment of contents including key frames and skipped frames according to the present invention;
FIGs. 5A and 5B are diagrams for showing the transmission efficiency in the case of requesting only key frames from a server by a terminal with the transmission efficiency in the case of requesting all frames from the server by the terminal;
FIG. 6 is a flow diagram illustrating an exemplary embodiment of a method for operating a terminal that reproduces contents by using key frames according to the present invention;
FIG. 7 is a flow diagram illustrating an exemplary embodiment of a method for operating a server that reproduces contents by using key frames according to the present invention;
FIG. 8 is a block diagram illustrating a configuration of a terminal according to an exemplary embodiment of the present invention; and
FIG. 9 is a block diagram illustrating a configuration of a server according to an exemplary embodiment of the present invention.

## DETAILED DESCRIPTION

Exemplary embodiments of the present invention will be described herein below with reference to the accompanying drawings so that a person or ordinary skill in the art can practice the presently claimed invention. In the following description of the exemplary embodiments of the present invention, detailed descriptions of well-known functions or configurations may be omitted when their inclusion would unnecessarily obscure appreciation of the subject matter of the present invention by an artisan. Also, like reference numerals denote like elements through the specification and drawings. An artisan should also understand and appreciate that a server could constitute more than one server, such as proxy server or servers, which would operate to provide content to the terminal according to the present invention.

Definitions

The present invention utilizes key frames, which according to the present invention are frames that are located at predetermined periods among one or more frames included in the content that are decodable without reference to other frames, which is distinguishable from, for example, conventional frame transmission of video. Non-key frames are defined as frames that are located between the respective key frames among the frames included in the content, and are decodable with reference to other frames.

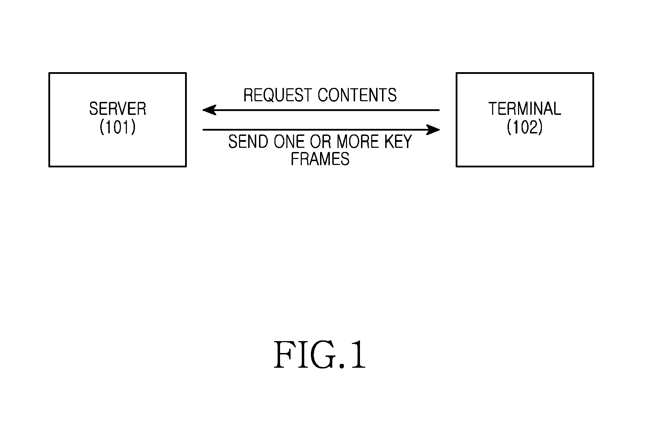

FIG. 1 is a diagram illustrating an overall exemplary configuration of a server and a terminal reproducing contents by using key frames according to the present invention. A server 101 receives a request for contents from a terminal 102, and transmits contents stored therein or coupled thereto to the terminal 102. In the present invention, the server 101 determines whether a request is received from the terminal 102 for stopping transmitting all frames of the content, and when the request is received the server transmits one or more key frames to the terminal 102 when receiving a request for the key frames from the terminal 102.

First, a description will be given of a method for operating the server 101 when the server 101 receives a request for stopping transmitting all frames of contents from the terminal 102. The server 101 receives a request for contents from the terminal 102, and transmits contents stored therein (or accessed from a non-transitory machine readable medium(s) thereby) to the terminal 102. The server 101, which comprises hardware such as processor or microprocessor that can be loaded with machine executable code, may receive a request by the terminal 102 for stopping the transmission of all frames of the content, after the start of transmission of the content to the terminal 102. More specifically, when the terminal 102 determines that a current network environment is poor, the terminal sends a request to server 101 requesting that the server 102 stop the transmission of all frames of the content. An artisan understands that the conventional server attempts continuous transmission to a terminal that has requested contents, because the conventional server does not consider a varying network condition. Moreover, in some conventional transmission systems, at best an "ACK" (acknowledgement) might be received back that data was received, and the lack of ACK can be a basis for retrying a transmission. However, the server 102 of the present invention may stop transmitting all frames of contents at the request of the terminal 102. Thus, the server 101 and the terminal 102 can perform communication by reflecting a current network condition. In an exemplary embodiment, the terminal 102 can request a stop of the transmission by the server and include a predetermined reason code that, for example, identifies the network quality as being below a certain threshold or at a particular level determined from among a plurality of levels (e.g. poor, fair, good, excellent, etc.).

Next, a description will be given of an operation of the server 101 for transmitting one or more key frames to the terminal 102 in response to the server 101 receiving from the terminal 102 a request for the key frames. As described above, after the server 101 receives a request for stopping transmission of all content frames, the server 101 receives a request for one or more key frames from the terminal 102.

Herein, the key frames are defined as frames that are located at predetermined periods among one or more frames included in the content, and are decodable without reference to other frames. Also, non-key frames are defined as frames that are located between the respective key frames among the frames included in the content, and are decodable with reference to other frames. In other words, the content comprises one or more frames including one or more key frames and one or more non-key frames. Specifically, when a current network condition is poor (poor as compared against an objective comparison of criteria, for example, noise, number of retries, etc.), the server 101 receives a request for one or more key frames from the terminal 102 while transmitting all the content frames to the terminal 102. Thus, according to the present invention, a varying network environment can be addressed by transmitting only the key frames of the content from the server 101 to the terminal 102, without transmitting all the frames of the content from the server 101 to the terminal 102. An advantage of the present invention is that when conditions make it difficult or not possible to receive all the content frames, the use of key frames permit the terminal to receive enough of the content so as to be able to provide same in a display or output.

The terminal 102, which may constitute a mobile terminal, PDA, table, notebook, video player, etc. may in the process of receiving the content from the server 101, request and receive only key frames of contents without receiving all frames of the content, in consideration of a current network environment. Specifically, when determining that a current network environment is incapable of receiving all frames of the content, or if a criteria such as a retry rate reaches a predetermined threshold, the terminal 102 may request and receive only key frames from the server 101. In contrast to the presently claimed invention, a conventional terminal requests transmitting of all content frames from a server without determining a current network condition. However, by considering a varying network environment in real time, or at predetermined intervals, when determining that all frames of the content cannot be received from the server 101, the terminal 102 of the present invention receives only key frames without receiving all frames of the content.

To reiterate, the present invention may also alternatively request the key frames even if all the frames can be received by the terminal, but might require a substantial number of retries that exceed a predetermined threshold.

Also, the terminal 102 provides an optimal service to a user by generating skipped frames by using the key frames received from the server 101. In other words, the skipped frames in this exemplary embodiment would constitute, for example, non-key frames that were omitted during the transmission of only key frames.

For example, according to the present invention the terminal 102 reconstructs the content by inserting the generated skipped frames at the respective frame drop positions between the respective key frames, thus providing a better service (e.g. a better quality of service) as compared to the case of reproducing contents including only key frames.

More specifically, when contents including only key frames is reproduced, since the non-key frames are frames between the key frames that were dropped from transmission, audio and video are not synchronized with each other.

In other words, a user viewing contents is inconvenienced because video and audio provided through a terminal are not synchronized with each other due to the missing non-key frames. However, the terminal 102 of the present invention minimizes the difference between video and audio by inserting skipped frames between the key frames, a user viewing contents can feel as if the contents including all key frames are displayed. An artisan should understand and appreciate that the inserted skipped frames may not constitute an entirety of all the non-key frames that were not transmitted.

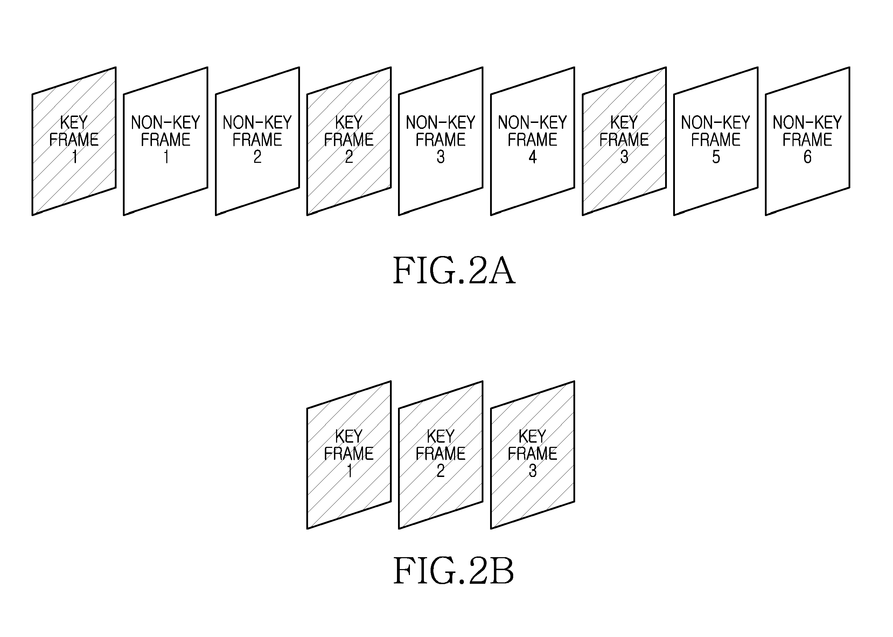

FIGs. 2A and 2B are diagrams illustrating an exemplary embodiment of key frames and non-key frames according to the present invention. FIG. 2A is a diagram illustrating an exemplary embodiment of key frames and non-key frames included in contents. Herein, the key frames are defined as frames that are located at predetermined periods (or predetermined sequences) among one or more frames included in the content, and are decodable without reference to other frames. More specifically, the contents include key frames and non-key frames, and the key frames are located at predetermined periods among all frames and are decodable without reference to other frames. The person of ordinary skill in the art should understand and appreciate that the present claims are not limited to the particular arrangement of key frames to non-key frames as shown in FIG. 2 and discussed herein. There can be various ratios of key frames to non-key frames, and depending on the amount of movement, the period or sequence of key frames to non-key frames may vary.

Also, the non-key frames are defined as frames that are located between the respective key frames among the frames included in the content and are decodable with reference to other frames. Thus, the contents include a plurality of frames, and key frames are located at predetermined periods among all the frames.

For example, as illustrated in FIG. 2A, it is assumed that contents includes 9 frames including 3 key frames and 6 non-key frames. The 3 key frames are arranged at predetermined periods with 2 non-key frames disposed between the respective key frames. Also, the 6 non-key frames are arranged such that 2 consecutive non-key frames are disposed between the respective key frames.

First, in the above example it is assumed that a terminal determines, in the process of receiving all 9 frames included in contents from a server, that a network environment is incapable of receiving all the frames. Thereafter, the terminal requests the server to stop transmitting all the content frames, and requests the server to transmit only 3 key frames. This request is made by the terminal to display the content by receiving only key frames decodable without reference to other frames, by reflecting a network environment incapable of receiving all 9 frames. In other words, even when a network environment is poor, the terminal can easily receive 3 key frames that are small in total size than all 9 frames. Also, since the key frames are decodable without reference to other frames, the terminal can provide contents displaying service as if contents including all frames are displayed.

As illustrated in FIG. 2B, when determining by the terminal (or the server for that matter) that a network environment is poor based on objective predetermined criteria, the terminal stops receiving all 9 frames from the server and receives only 3 key frames. Thus, the terminal receives only 3 key frames among all 9 frames of the content to provide a multimedia service to the user. As described above, the key frames are located preferably at predetermined periods among one or more frames included in the content, and are decodable without reference to other frames. When contents including only key frames are displayed, the video and audio of the contents are not accurately synchronized with each other. However, this may be the second best solution or possibly the only solution in the condition where all frames cannot be received, or require retries beyond a predetermined threshold.

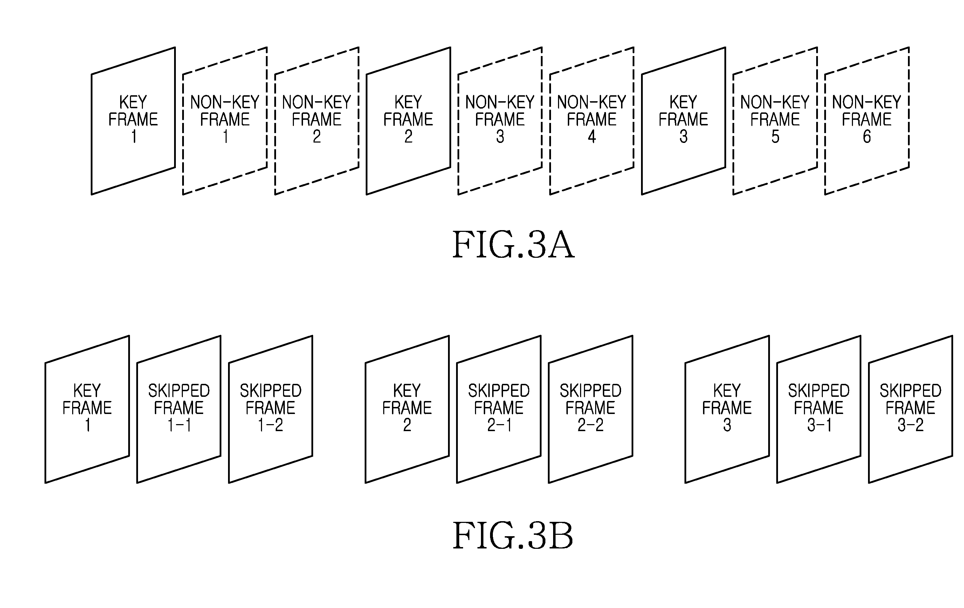

FIGs. 3A and 3B are diagrams illustrating another exemplary embodiment of generating skipped frames according to the present invention. FIG. 3A is a diagram illustrating an exemplary embodiment in which a terminal determines that a current network condition is poor based upon predetermined criteria, and receives only the key frames from among all the frames included in contents from a server. Thus, for example, the terminal receives only a key frame 1, a key frame 2, and a key frame 3 that are represented in solid lines. In other words, from among all the frames included in the content, non-key frames 1 to 6 represented in dotted lines are dropped from being transmitted when the terminal determines the quality at or below a certain predetermined amount or threshold. Specifically, when determining that a network condition is poor, the terminal may reproduce the content by receiving only key frames without receiving all the frames included in the content. When the terminal reproduces contents using only the transmitted key frames, the video and audio of the content are not accurately synchronized with each other as compared to the case of reproducing contents including key frames and non-key frames. However, this may be the second best solution or possibly only solution in the condition where all the frames cannot be received.

FIG. 3B is a diagram illustrating an exemplary embodiment of generating skipped frames according to the present invention. As described above, when the terminal reproduces contents including only key frames, the video and audio of the content are not accurately synchronized with each other as compared to the case of reproducing contents including key frames and non-key frames. However, the terminal of the present invention provides an optimal service to the user by generating skipped frames by using key frames received from the server. a control unit of the terminal is configured for generating the skipped frames by using the key frames received from the server. Herein, the skipped frames are defined as one or more frames that are identical to the respective key frames. In other words, in this particular example, the skipped frames are generated by duplicating frames identical to the respective key frames, as many as the number of non-key frames dropped between the respective key frames.

A process of generating skipped frames will be described in detail. First, the terminal receives one or more key frames from the server, checks the number of frames dropped between the respective key frames, and duplicates and generates frames identical to the respective key frames in terms of the image and in a quantity that is equal to the number of frames dropped between the respective key frames. As illustrated in FIG. 3B, the terminal receives 3 key frames from the server, checks the number of 2 frames that were dropped between the key frame 1 and the key frame 2, which is the number of non-key frames dropped between the key frame 1 and the key frame 2, and duplicates and generates two skipped frames identical to each of the key frame 1, the key frame 2, and the key frame 3. In other words, the terminal duplicates and generates 2 skipped frames that are identical to each of the key frames. For example, 2 skipped frames identical to the key frame 1 are duplicated to generate a skipped frame 1-1 and a skipped frame 1-2. Likewise, 2 skipped frames identical to the key frame 2 are duplicated to generate a skipped frame 2-1 and a skipped frame 2-2. Also, 2 skipped frames identical to the key frame 3 are duplicated to generate a skipped frame 3-1 and a skipped frame 3-2. Thus, the total amount of frames at the terminal is 9 which is the same as the original content at the server.

The terminal of the present invention reconstructs the content by inserting the generated skipped frames at the respective frame drop positions between the respective key frames and the generated skip frames are inserted in a quantity that matches the dropped non-key frames, thus providing a better service as compared to the case of reproducing contents including only key frames. More specifically, when contents including only key frames is reproduced, since non-key frames between key frames are dropped, audio and video are not synchronized with each other. Accordingly, a user viewing contents is inconvenienced because video and audio provided through a terminal are not synchronized with each other. However, since the terminal of the present invention minimizes the difference between video and audio by inserting skipped frames between key frames, a user viewing contents can feel as if contents including all key frames are being displayed. Also, in the event the network conditions changes from poor to good and a long video sequence is being transmitted, the server then can return to transmitting all the content frames for future frames and the audio will essentially be in synchronization with subsequent frame transmissions because the quantities of frames were not reduced to merely the key frames.

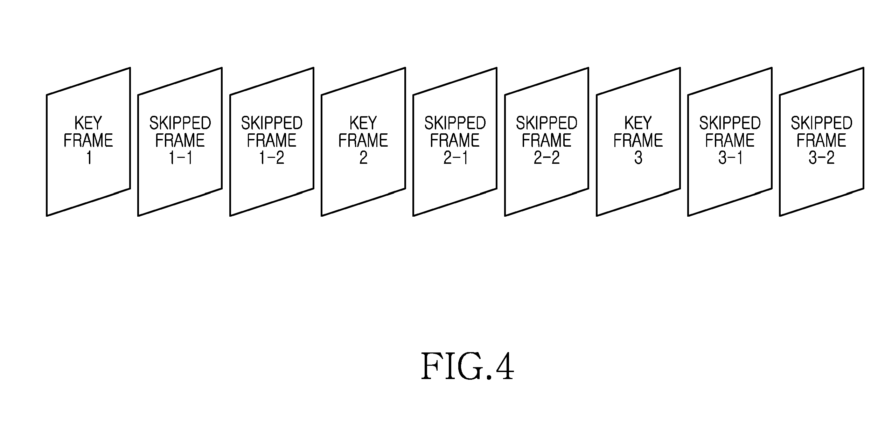

FIG. 4 is a diagram illustrating an exemplary embodiment of contents including key frames and skipped frames according to the present invention. The content includes one or more key frames and one or more skipped frames. To facilitate an understanding of contents including key frames and skipped frames according to the present invention, FIG. 4 illustrates only 3 key frames and 6 skipped frames. Contents illustrated in FIG. 4 include key frames and skipped frames. In other words, when a network environment is poor, the terminal receives only key frames from the server, and duplicates the respective key frames in a quantity that corresponds to the number of non-key frames, and inserts the generated skipped frames at the positions of the non-key frames.

In contrast to the present invention, when a conventional terminal receives key frames from a server, the conventional terminal reproduces contents by using only the received key frames. When contents including only key frames are reproduced, the video and audio of the content are not synchronized with each other, as the total number of frames are less than when a full transmission occurs.

Thus, in the conventional case, the users' desires to enjoy contents of high picture quality and high sound quality with the development of information communication technology are not satisfied because of the receipt of only key frames. However, the terminal of the present invention generates skipped frames by duplicating key frames received from the server, thereby solving the problem of the video and audio of contents not being synchronized with each other. Specifically, the terminal inserts the skipped frames at the positions of the non-key frames that are included in the frame but are dropped, thereby overcoming the problem of the video and audio not being synchronized with each other when contents including only key frames is reproduced. Herein, the skipped frames are defined as one or more frames that are identical to the respective key frames. In other words, the skipped frames are generated by duplicating frames identical to the respective key frames, in a quantity at least that corresponds to the number of non-key frames dropped between the respective key frames. A process of generating skipped frames will now be described in detail. First, the terminal receives one or more key frames from the server, checks the number of frames dropped between the respective key frames, and duplicates and generates frames identical to the respective key frames, in a corresponding quantity to the number of frames dropped between the respective key frames. In other words, the skipped frames are generated by duplicating frames identical to the respective key frames, as many as the number of non-key frames dropped between the respective key frames. Upon receiving the 3 key frames, the terminal detects that the content includes 6 non-key frames. In other words, the skipped frames are generated by duplicating frames identical to the respective key frames, in a quantity number of non-key frames dropped between the respective key frames. In other words, after detecting that the number of non-key frames that were dropped between the key frame 1 and the key frame 2 is 2, the terminal generates a skipped frame 1-1 and a skipped frame 1-2 that are identical to the key frame 1. Likewise, the terminal generates a skipped frame 2-1 and a skipped frame 2-2 that are identical to the key frame 2. Also, the terminal generates a skipped frame 3-1 and a skipped frame 3-2 that are identical to the key frame 3. Herein, the skipped frames are defined as one or more frames that are identical to the respective key frames. In other words, the terminal inserts the skipped frame 1-1 and the skipped frame 1-2 identical to the key frame 1, at the positions of key frames dropped between the key frame 1 and the key frame 2. Likewise, the terminal inserts the skipped frame 2-1 and the skipped frame 2-2 identical to the key frame 2, at the positions of key frames dropped between the key frame 2 and the key frame 3. Also, the terminal inserts the skipped frame 3-1 and the skipped frame 3-2 identical to the key frame 3, at the positions of key frames dropped after the key frame 3.

As described above, when the terminal reproduces contents including 3 key frames and 6 generated skipped frames at the terminal end, it is possible to provide a picture quality and a sound quality similar to those in the case where contents including 3 key frames and 6 non-key frames is reproduced. While in the exemplary embodiments a poor network quality is a basis for minimizing the transmission to key frames, the quality of three key frames and the 6 generated skipped frames can increase the quality of the picture and sound, as discussed herein above.

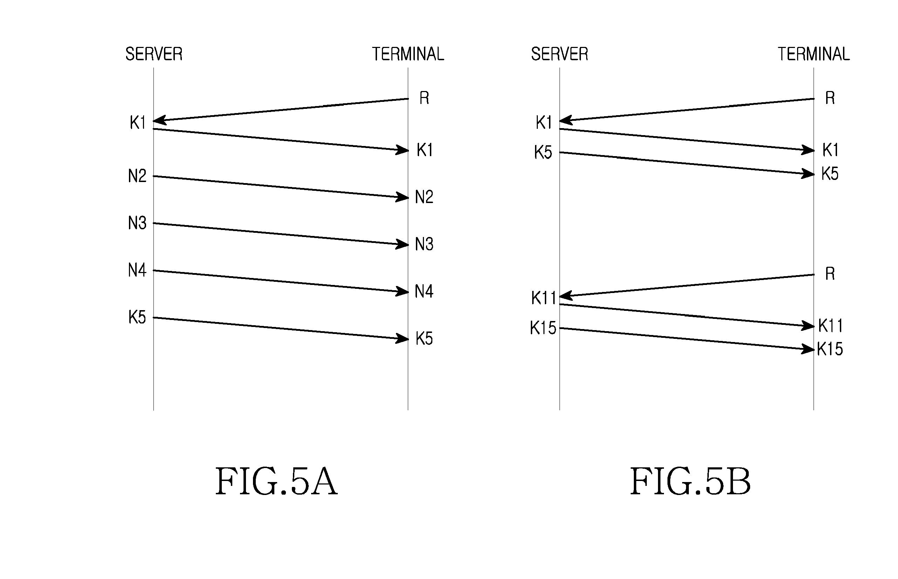

FIGs. 5A and 5B are diagrams for comparing the transmission efficiency in the case of requesting only key frames from a server by a terminal with the transmission efficiency in the case of requesting all frames from the server by the terminal. As described above, the terminal of the present invention requests and receives only key frames without requesting all frames from the server when a network environment is poor. Specifically, the terminal can perform continuous content reception from the server when receiving all the frames from the server, but should request a plurality of key frames when receiving only key frames from the server. In other words, the terminal of the present invention can request the next key frame only after transmitting a periodic frame request to the server and receiving the requested respective key frames from the server. When the server supports a pipelined request, the terminal may request a plurality of key frames simultaneously. However, also in this case, the terminal can receive the next key frame only after receiving the simultaneously requested key frames from the server. Thus, the transmission efficiency is verified in the case where the terminal receives key frames from the server according to the present invention, and the transmission efficiency in the case of requesting and receiving all the frames. Hereinafter, the transmission efficiency of the present invention will be compared with the transmission efficiency in the conventional case of receiving all the frames. It should be noted that when the present invention has good network quality (as compared with a threshold) all of frames are transmitted to the terminal.

FIG. 5A is a diagram illustrating a relation in which a terminal requests and receives all frames from a server. As illustrated in FIG. 5A, the terminal requests and receives an entire content including key frames and non-key frames from the server. In other words, when the terminal requests all frames of contents from the server, the terminal needs only one request with respect to the server. Herein, R denotes a request for all frames that is made by the terminal with respect to the server, K1 and K5 denote key frames, and N1 to N4 denote non-key frames. In other words, when the terminal requests all frames included in contents from the server, the server transmits an entire frame including the key frames K1 and K5 and the non-key frames N1 to N5 to the terminal.

However, when the terminal requests only key frames from the server, the terminal needs a continuous key frame request with respect to the server. FIG. 5B is a diagram illustrating a relation between key frame transmission and key frame reception between the server and the terminal, when the terminal requests only key frames from the server. As illustrated in FIG. 5B, when the terminal requests key frames from the server, the server transmits the key frames to the terminal, as many as requested by the terminal. In other words, when receiving a request for the key frames K1 and K5 from the terminal, the server transmits the two frames K1 and K5 to the terminal. Likewise, the terminal requests two key frames K11 and K15 from the server. When receiving a request for the two key frames K11 and K15 from the terminal, the server transmits the two frames K11 and K15 to the terminal. In this particular example, when the terminal requests only key frames from the server, the terminal makes frequent requests by requesting the next frames only after receiving the requested frames. The transmission efficiency of the routine will be compared with the transmission efficiency of the routine of requesting all the frames.

Equation (1) represents a transmission time.

$$\frac{RTT}{2} \qquad \ldots \ldots (1)$$

Herein, RTT denotes a round trip time. Since a request time from the terminal to the server is half the round trip time, it is expressed as Equation 1, RTT/2.

Equation (2) represents a transmission time for an entire stream.

$$\frac{TS}{EB} \qquad \ldots \ldots (2)$$

Herein, TS denotes the size of data transmitted, and ES denotes an allowed bandwidth.

Thus, the allowed bandwidth ES is expressed as Equation (3).

$$\frac{TSprev}{TTprev} \qquad \ldots \ldots (3)$$

Herein, TSprev denotes a previous transmission data amount, and TTprev denotes a previous data transmission time.

From Equations (1) to (3), a time for transmission of only key frames and audio frames is expressed as Equation (4).

$$\frac{N}{M} \times \frac{TRR}{2} \times \frac{KS + AS}{EB} \qquad \ldots \ldots (4)$$

Herein, N denotes the number of key frames and audio frames, M denotes the number of requests that can be simultaneously transmitted from the terminal to the server, KS denotes the size of a key frame, and AS denotes the size of an audio frame.

Thus, if the value of Equation (4) is smaller than the value of Equation (2), the control unit can determine that the transmission efficiency in the case of requesting only key frames according to the present invention is higher than the transmission efficiency in the conventional case of requesting all the frames. In other words, when Equation (5) is satisfied, it can be determined that the transmission efficiency in the case of requesting only key frames from the server by the terminal is higher than the transmission efficiency in the case of requesting all the frames.

$$N < 2 \times M \times \frac{(TS - KS - AS)}{(EB \times RTT)} \qquad \ldots \ldots (5)$$

In other words, only when the number of requests made by the terminal with respect to the server is larger than the right side of Equation (5), the controller can determined that the transmission efficiency in the case of requesting only key frames from server by the terminal is higher than the transmission efficiency in the case of requesting all the frames. Thus, when the terminal requests only key frames from the server according to the present invention, Equation (5) should be satisfied.

An artisan should also under that while in FIGs. 5B, there are a number of requests "R" are required to be made, it is within the spirit and scope of the invention that there can be fewer requests for each server sequence

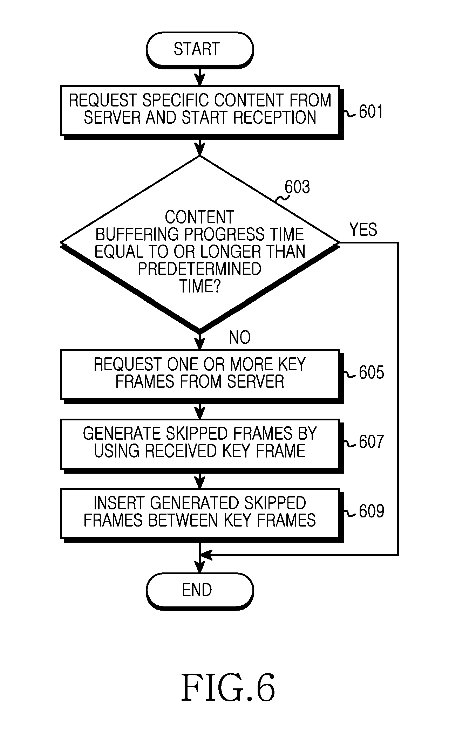

FIG. 6 is a flow diagram illustrating an exemplary embodiment of a method for operating a terminal reproducing contents by using key frames according to the present invention.

As illustrated in FIG. 6, at (601) the terminal requests contents from a server and starts to receive the content from the server. In other words, the terminal starts to receive all frames of the content including key frames and non-key frames from the server.

Thereafter, At step (603), the terminal determines whether or not a buffering progress time of the content is equal to or longer than a predetermined time.

More specifically, when receiving data from the server, the terminal stores data temporarily in the interim in order to correct a speed difference between the terminal and the server, and adjusts the operation speeds of a highspeed central processing unit (CPU) and a low-speed input/output unit, thus improving the total processing capacity of the system. For this reason, the terminal receives a predetermined amount of contents in advance when receiving the content from the server.

In the present invention, when the terminal receives contents from the server, the terminal determines whether a buffering progress time of the content is equal to or longer than a predetermined time preset by the user.

When determining that the buffering progress time is shorter than the predetermined time, the terminal requests one or more frames from the server (605). Specifically, when determining that a network environment is poor, which can be in response to a terminal notifying the server of such a prior environment, the terminal stops transmitting all the frames of the content and requests only key frames from the server again. Herein, the key frames are defined as frames that are located at predetermined periods determined from among one or more frames included in the content, and are decodable without reference to other frames. Specifically, contents sat the server includes key frames and non-key frames, and the key frames are located at predetermined periods among all frames and are decodable without reference to other frames. Also, the non-key frames are defined as frames that are located between the respective key frames and among the frames included in the content and are decodable with reference to other frames. In other words, when determining that a network environment is poor (by the control unit being configured for analyzing a particular metric, the terminal requests that the server stops transmitting all the content frames and requests that only key frames be transmitted from the server. Thus, the terminal can perform smooth communication by reflecting a varying network environment in real time by monitoring the environment.

After requesting one or more key frames from the server, at (607) the terminal generates skipped frames corresponding identically to key frames received from the server. Herein, the skipped frames are defined as one or more frames that are identical to the respective key frames. In other words, the skipped frames are generated by duplicating frames identical to the respective key frames, as many as the number of non-key frames dropped between the respective key frames. A process of generating skipped frames will be described in detail. First, the terminal receives one or more key frames from the server, checks the number of frames dropped between the respective key frames, and duplicates and generates frames identical to the respective key frames, as many as the number of frames dropped between the respective key frames.

After generating the skipped frames by using the received key frames, at (609) the terminal inserts the generated skipped frames between the respective key frames.

More specifically, the terminal generates contents including key frames and skipped frames under the control of the control unit by inserting the generated respective skipped frames at the positions of non-key frames that were located between the respective key frames. Then, the operation process of the terminal according to the present invention is ended. When receiving key frames from a server, a conventional terminal reproduces contents by using only the received key frames. When contents including only key frames are reproduced, the video and audio of the content are not synchronized with each other. Thus, users' desires to enjoy contents of high picture quality and high sound quality with the development of information communication technology are not satisfied.

However, as described herein above, the terminal of the present invention generates skipped frames by key frames received from the server, thereby solving the problem of the video and audio of contents not being synchronized with each other. Specifically, the terminal inserts the skipped frames at the positions of the non-key frames that are included in the frame but are dropped, thereby overcoming the problem of the video and audio not being synchronized with each other when contents including only key frames is reproduced.

On the other hand, when determining at step (603) that the buffering progress time of the content is equal to or longer than the predetermined time, the terminal may receive all the frames of the content from the server and immediately end the operation process of the terminal according to the present invention. A buffering progress taking longer than a predetermined time could be determined as constituting an indicia of poor network quality.

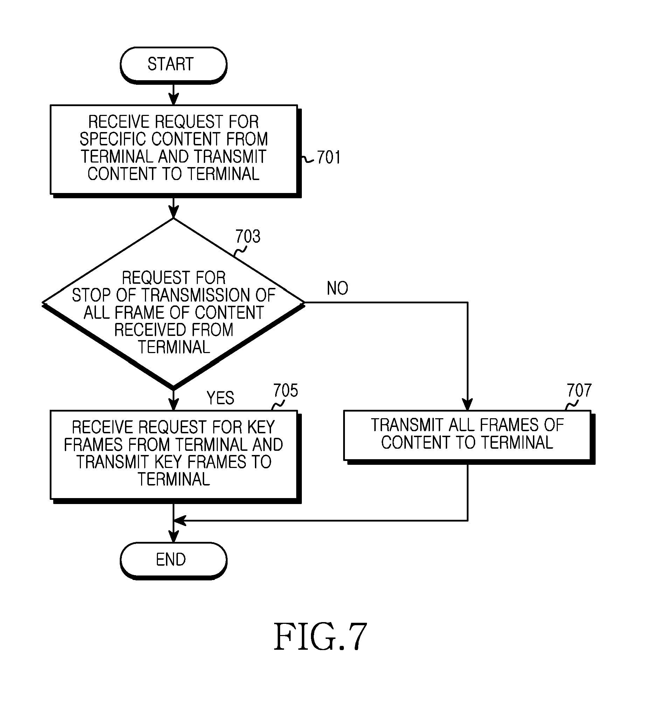

FIG. 7 is a flow diagram illustrating an exemplary embodiment of a method for operating a server reproducing contents by using key frames according to the present invention.

As illustrated in FIG. 7, at (701) the server receives a request for contents from a terminal and transmits the content to the terminal. Specifically, when receiving a request for contents from the terminal, the server transmits all frames of the content to the terminal. In other words, the server transmits all the frames including key frames and non-key frames included in the content to the terminal.

After receiving a request for contents from the terminal and transmitting the content to the terminal, the server determines at (703) whether a request for stopping transmitting all the frames of the content is received from the terminal. Specifically, by monitoring a network environment in real time, when determining that the network environment is incapable of receiving all the frames of the content from the server, the terminal requests the server to stop transmitting all the frames of the content. In other words, according to the determination of the terminal, the server may receive a request for stopping transmitting all the frames of the content transmitted from the server to the terminal.

Thereafter, when receiving a request for stopping transmitting all the frames of the content from the terminal, the server at (705) receives a request for key frames from the terminal and transmits the key frames to the terminal. Specifically, when a current network environment is incapable of transmitting all the frames of the content to the terminal, the server stops transmitting all the frames of the content to the terminal and transmits only key frames to the terminal again. Then, the operation process of the server is ended.

On the other hand, when at (703), the server does not receive a request for stopping transmitting all the frames of the content from the terminal, then at (707) the server transmits all the frames of the content to the terminal. Then, the operation process of the server is ended.

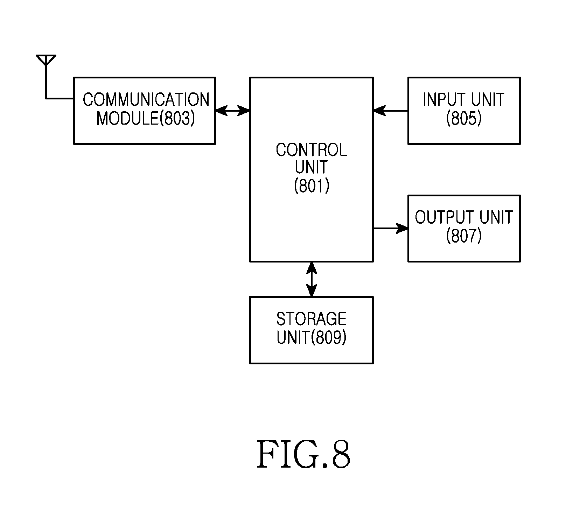

FIG. 8 is a block diagram illustrating a configuration of a terminal according to an exemplary embodiment of the present invention. As illustrated in FIG. 8, the terminal according to the present invention may include a control unit 801, a communication module 803, an input unit 805, a display unit 807, and a storage unit 809.

The control unit 801, which comprises hardware including a processor or microprocessor, is configured to control an overall operation of the terminal. For example, the control unit 801 receives one or more key frames, generates one or more skipped frames, and inserts the generated skipped frames between the key frames. Also, the control unit 801 determines a buffering state of contents, checks a buffering progress time of the content, and determines whether the buffering progress time is equal to or longer than a predetermined time. The control unit 801 stops receiving all frames of the content when determining that the buffering progress time is shorter than the predetermined time. Additionally, the control unit 801 receives one or more key frames from a server, checks the number of frames dropped between the respective key frames, and duplicates frames identical to the respective key frames, as many as the number of frames dropped between the respective key frames.

With further regard to FIG. 8, the control unit 801 inserts the generated skipped frames at the respective frame drop positions between the respective key frames. Although not illustrated in FIG. 8, the control unit 801 may include a selective filter, an extractor, and a decoder. The selective filter measures a receivable bandwidth of the content from the server. The extractor analyzes video information, and divides and provides an audio signal and a video signal to the decoder. The decoder decodes a stream received from the extractor, and provides the decoded signal to the display unit 807.

The communication module 803 processes signals transmitted/received through an antenna for voice and data communication. For example, the communication module 803 requests one or more key frames included in contents from the server, and requests the content from the server.

The input unit 805 provides the control unit 801 with input data generated by user selection. The input unit 805 may constitute a touch screen

The display unit 807 displays the story information, menu screen and state information of the terminal under the control of the control unit 801.

The storage unit 809 is a non-transitory machine readable medium and may include a program storage unit for storing a program for controlling an operation of the terminal, and a data storage unit for storing data generated during the execution of a program.

In the above block configuration, the control unit 801 may perform an overall control function of the terminal. The above configurations should be considered in descriptive sense only and not for the purpose of limitation, and those skilled in the art will understand that various changes may be made therein without departing from the scope of the present invention. For example, although the respective units are configured and illustrated separately, the control unit 801 may be configured to perform all or some of the functions of the terminal.

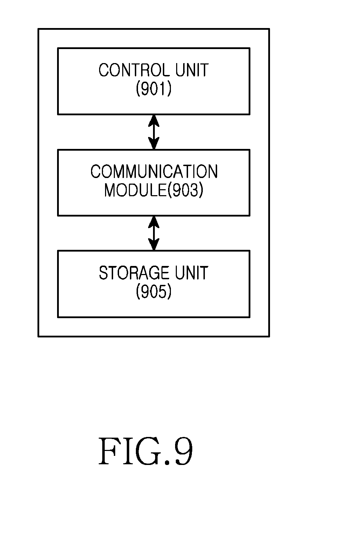

FIG. 9 is a block diagram illustrating a configuration of a server according to an exemplary embodiment of the present invention. As illustrated in FIG. 9, the server according to the present invention may include a control unit 901, a communication module 903, and a storage unit 905.

The control unit 901, which comprises hardware including a processor or microprocessor, is configured to control an overall operation of the server. For example, the control unit 901 determines whether a request for stop transmitting all frames of contents is received from a terminal.

The communication module 903 receives a request for one or more key frames of contents from the terminal and transmits the key frames to the terminal. The communication module 903 receives a request for the content from the terminal and transmits the content to the terminal. When the request for content is received from the terminal, the communication module 903 stops transmitting all frames of the contents to the terminal.

The storage unit 905 comprises a non-transitory machine readable medium that may include a program storage unit for storing a program for controlling an operation of the server, and a data storage unit for storing data generated during the execution of a program.

In the above block configuration, the control unit 901 may perform an overall function of the terminal. The above configurations should be considered in descriptive sense only and not for the purpose of limitation, and those skilled in the art will understand that various changes may be made therein without departing from the scope of the present invention. For example, although the respective units are configured and illustrated separately, the control unit 901 may be configured to perform all or some of the functions of the terminal.

The above-described methods according to the present invention can be implemented in hardware, firmware or as software or computer code that is stored on a non-transitory machine readable medium such as a CD ROM, a RAM, a floppy disk, a hard disk, or a magneto-optical disk or computer code downloaded over a network originally stored on a remote recording medium or a non-transitory machine readable medium and stored on a local non-transitory recording medium, so that the methods described herein can be loaded into hardware such as a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, an artisan understands and appreciates that a "processor" or "microprocessor" constitute hardware in the claimed invention. Under the broadest reasonable interpretation, the appended claims constitute statutory subject matter in compliance with 35 U.S.C. §101.

The terms "unit" or "module" as used herein is to be understood as constituting hardware such as a processor or microprocessor configured for a certain desired functionality in accordance with statutory subject matter under 35 U.S.C. §101 and does not constitute software per se.

While the invention has been shown and described with reference to certain exemplary embodiments thereof, it will be understood by those skilled in the art that various changes in form and details may be made therein without departing from the spirit and scope of the invention as defined by the appended claims. Therefore, the scope of the invention is defined not by the detailed description of the invention but by the appended claims, and all differences within the scope will be construed as being included in the present invention.


**Claims**


1. A method for operating a portable terminal, comprising:

    requesting by a control unit of the portable terminal a transmission of one or more key frames of content from a server without transmission of one or more non-key frames associated with said one or more key frames; generating by the control unit of the portable terminal one or more skipped frames in a quantity that corresponds to the one or more non-key frames, respectively, by duplicating the key frames received from the server; and inserting by the control unit of the portable terminal the generated skipped frames between the key frames of the content in the quantity and a position that corresponds to the one or more non-key frames that were not included in the transmission of the associated said one or more key frames.

2. The method of claim 1, wherein the portable terminal requests transmission of only said one or more key frames of the content when the portable terminal determines that a predetermined criteria of network quality is at or below a predetermined threshold level,
wherein the portable terminal initially requests an entirety of the content from the server, the portable terminal determines a buffering state of the content while receiving the content from the server.

3. The method of claim 2, wherein determining the buffering state of the content while receiving the content from the server comprises:

checking a buffering progress time of the content; and
determining whether the buffering progress time is equal to or longer than a predetermined time.

4. The method of claim 3, further comprising:

the portable terminal requests that the server stop transmitting all frames of the content when determining that the buffering progress time is shorter than the predetermined time.

5. The method of claim 3, wherein the portable terminal requests that the server transmit said one or more key frames without transmission of one or more non-key frames associated with said one or more key frames in response to determining that a buffering progress time of the portable terminal is shorter than the predetermined time.

6. The method of claim 1, wherein the portable terminal requests that the server transmits one or more frames of content including said one or more key frames and said one or more non-key frames associated with said one or more key frames,
wherein said one or more key frames are located at predetermined periods among one or more the frames included in the content, and are decodable without reference to other frames, and
wherein said one or more non-key frames are located between said one or more key frames, respectively from among said one or more frames included in the content, and said one or more non-key frames are decodable with reference to other frames of the content.

7. The method of claim 1, wherein the generated skipped frames are duplicates of the one or more key frames,
wherein the control unit of the portable terminal determines a quantity of skipped frames to be generated based on information in said one or more key frames.

8. The method of claim 1, wherein generating the skipped frames by duplicating said one or more key frames received from the server comprises:

receiving by the portable terminal the key frames from the server;
checking by the control unit of the portable terminal a number of non-key frames dropped between the respective said one or more key frames; and
duplicating by the control unit of the portable terminal frames identical to the respective said one or more key frames in a quantity corresponding to the number of non-key frames dropped between the respective key frames.

9. The method of claim 1, wherein inserting by control unit of the portable terminal the generated skipped frames between said one or more key frames comprises inserting the generated skipped frames at respective non-key frame drop positions between respective said one or more key frames.

10. A method for operating a server, comprising:

receiving from a terminal a request for one or more key frames of contents without sending one or more non-key frames associated with said one or more key frames; and

transmitting by the server the requested said one or more key frames to the terminal.

11. The method of claim 10, wherein said one or more key frames are located at predetermined periods among one or more frames included in the content, and said one or more key frames are decodable by the terminal without reference to other frames in the content.

12. The method of claim 10, further comprising:

receiving by the server an initial request from the terminal for all of the content frames; and
transmitting the content frames to the terminal sequentially until a request is received from the terminal to stop transmitting all of the content frames and to transmit only said one or more key frames of contents.

13. The method of claim 12, further comprising:

determining whether the request for stopping transmitting all of the content frames is received from the terminal; and
stopping transmission of all the content frames to the terminal when the request is received from the terminal.

14. An electronic device, comprising:

one or more processors;
memory; and
one or more programs, wherein the one or more programs are stored in the memory and configured to cause, when executed by the electronic device, the electronic device to perform the method of any of claims 1 to 9.

15. An electronic device, comprising:

one or more processors;
memory; and
one or more programs, wherein the one or more programs are stored in the memory and configured to cause, when executed by the electronic device, the electronic device to perform the method of any of claims 10 to 13.

FIG.1

KEY FRAME 1  NON-KEY FRAME 1  NON-KEY FRAME 2  KEY FRAME 2  NON-KEY FRAME 3  NON-KEY FRAME 4  KEY FRAME 3  NON-KEY FRAME 5  NON-KEY FRAME 6

FIG.2A

KEY FRAME 1  KEY FRAME 2  KEY FRAME 3

FIG.2B

EP 2 634 995 A1

FIG.3A

FIG.3B

| KEY FRAME 1 | SKIPPED FRAME 1-1 | SKIPPED FRAME 1-2 | KEY FRAME 2 | SKIPPED FRAME 2-1 | SKIPPED FRAME 2-2 | KEY FRAME 3 | SKIPPED FRAME 3-1 | SKIPPED FRAME 3-2 |

FIG.4

EP 2 634 995 A1

SERVER                    TERMINAL

R

K1 ←

K1 →         K1

N2 →         N2

N3 →         N3

N4 →         N4

K5 →         K5

FIG.5A

SERVER                    TERMINAL

R

K1 ←

K5 →         K1

             K5

             R

K11 ←

K15 →        K11

             K15

FIG.5B

START

REQUEST SPECIFIC CONTENT FROM
SERVER AND START RECEPTION ᒫ601

603

CONTENT
BUFFERING PROGRESS TIME
EQUAL TO OR LONGER THAN
PREDETERMINED
TIME?

YES

NO

REQUEST ONE OR MORE KEY
FRAMES FROM SERVER ᒫ605

GENERATE SKIPPED FRAMES BY
USING RECEIVED KEY FRAME ᒫ607

INSERT GENERATED SKIPPED
FRAMES BETWEEN KEY FRAMES ᒫ609

END

FIG.6

START

RECEIVE REQUEST FOR
SPECIFIC CONTENT FROM
TERMINAL AND TRANSMIT
CONTENT TO TERMINAL — 701

703

REQUEST FOR
STOP OF TRANSMISSION OF
ALL FRAME OF CONTENT
RECEIVED FROM
TERMINAL

NO

YES 705

RECEIVE REQUEST FOR KEY
FRAMES FROM TERMINAL AND
TRANSMIT KEY FRAMES TO
TERMINAL

707

TRANSMIT ALL FRAMES OF
CONTENT TO TERMINAL

END

FIG.7

COMMUNICATION MODULE(803)

CONTROL UNIT (801)

INPUT UNIT (805)

OUTPUT UNIT (807)

STORAGE UNIT(809)

FIG.8

CONTROL UNIT
(901)

COMMUNICATION
MODULE(903)

STORAGE UNIT
(905)

FIG.9

**EP 2 634 995 A1**

Europäisches Patentamt

European Patent Office

Office européen des brevets

# EUROPEAN SEARCH REPORT

**Application Number**

EP 13 15 6197

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 643 422 B1 (COVELL MICHELE [US] ET AL) 5 January 2010 (2010-01-05) | 10-13,15 | INV. H04L29/06 |
| Y | * abstract * <br> * column 3 - column 12; figures 1-6 * <br> ----- | 1-9,14 | |
| Y | EP 1 622 385 A1 (MICROSOFT CORP [US]) 1 February 2006 (2006-02-01) <br> * abstract; figures 1-11 * <br> * paragraph [0017] - paragraph [0053] * <br> ----- | 1-9,14 | |

**TECHNICAL FIELDS SEARCHED (IPC)**

H04L

The present search report has been drawn up for all claims

| Place of search | Date of completion of the search | Examiner |
|---|---|---|
| The Hague | 7 June 2013 | Manthey, Axel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

22

## ANNEX TO THE EUROPEAN SEARCH REPORT
## ON EUROPEAN PATENT APPLICATION NO.

EP 13 15 6197

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2013

| Patent document cited in search report | | Publication date | Patent family member(s) | | Publication date |
|---|---|---|---|---|---|
| US 7643422 | B1 | 05-01-2010 | NONE | | |
| EP 1622385 | A1 | 01-02-2006 | CN | 1756369 A | 05-04-2006 |
| | | | EP | 1622385 A1 | 01-02-2006 |
| | | | JP | 4989054 B2 | 01-08-2012 |
| | | | JP | 2006060802 A | 02-03-2006 |
| | | | KR | 20060048952 A | 18-05-2006 |
| | | | US | 2006026294 A1 | 02-02-2006 |

EPO FORM P0459

For more details about this annex : see Official Journal of the European Patent Office, No. 12/82